# EUROPEAN PATENT APPLICATION

(11) **EP 4 794 127 A1**
(43) Date of publication of application: **19.08.2026**
(21) Application number: 25158241.7
(22) Date of filing: 17.02.2025
(51) Int. Cl.: H01R 4/46, H01R 4/66, H02G 13/00

(54) **LIGHTNING CONDUCTOR CLIP**

(71) Applicant: ABB SCHWEIZ AG, 5400 Baden (CH)
(72) Inventor: Rybak, Andrzej, 30-349 Krakow (PL); Rzepecki, Michal, 30-633 Krakow (PL); Grabowski, Pawel, 38-422 Kroscienko Wyzne (PL); Gentsch, Dietmar, 40882 Ratingen (DE); Sarmiento Penuela, Oscar, 8700 Zürich (CH)
(74) Representative: AOMB Polska Sp. z.o.o.

(57) **Abstract**

The present invention relates a lightning conductor clip comprising: a base (1) having connecting parts (4) at its opposite sides; a lid (2) having complementary connecting parts (3) at its opposite sides; fixing means (5) for joining the base (1) and the lid (2) together at the connecting parts (4) and the complementary connecting parts (3), wherein the connecting parts (4) and the complementary connecting parts (3) a gap (6) is formed such that the lid (1) undergoes elastic deformation or elastic and plastic deformation in the given order, when clamping force is applied to the fixing means (6) causing the connecting parts (4) and the complementary connecting parts (3) to come closer, thereby increasing a contact surface between the lid (2) and the conductor element (8, 9).

## Description

### TECHNICAL FIELD

The present disclosure relates, in general, to lightning protection systems. More precisely, the subject-matter of the present invention is a lightning conductor clip applicable in all areas of earthing and lightning.

### BACKGROUND ART

The currently used clips in lightning protection applications are fabricated as flat or pre-bent holders with simple design which causes the uneven distribution of the clamping force over the entire contact surface of the clip with the conductor. This can lead to malfunctioning of the clip, i.e., a breaking can occur at the edges where the clip is in contact with conductors.

One example of known in the prior art clip is disclosed in WO2008071986A1.

Accordingly, it is the objective of the present invention to provide a clip for lightning protection that removes at least some of the disadvantages of the prior art. Yet another objective of the present invention is to provide a clip allowing for better holding of the conductors and more reliable connection.

### SUMMARY OF THE INVENTION

The objective of the present invention has been achieved by providing a lightning conductor clip with a lid that undergoes elastic or both elastic and plastic deformation in the given order when clamping force is applied.

According to the present invention, there is provided a lightning conductor clip for coupling at least a first conductor element and a second conductor element to form an electrical and mechanical connection through the application of clamping force. The lightning conductor clip comprises:
a base having connecting parts at its opposite sides;
a lid having complementary connecting parts at its opposite sides;
fixing means for joining the base and the lid together at the connecting parts and the
complementary connecting parts;
wherein the base and the lid define an enclosed passage for receiving and retaining at least the first conductor element and the second conductor element,
wherein between the connecting parts and the complementary connecting parts a gap is formed such that the lid undergoes elastic or elastic and plastic deformation in the given order, when clamping force is applied to the fixing means causing the connecting parts and the complementary connecting parts to come closer, thereby increasing a contact surface between the lid and the conductor element.

In one embodiment, the lid comprises a clamping part disposed between the connecting parts, said clamping part has a curved or geometrically formed inner surface facing the base such that only part of the inner surface of the lid is in direct contact with the conductor.

In another embodiment, the connecting parts of the lid are bent out upwardly with respect to substantially flat outer surface of the clamping part.

In yet another embodiment, the lid may be formed from any suitable material such as metal or plastic being suitable for plastic deformation under the action of clamping force.

In one embodiment, the fixing means is a bolt or snap-fits.

In one embodiment, the connecting parts and the complementary connecting parts comprise rounded projections disposed at each corner of the lid, said rounded projections have mounting holes for receiving the fixing means.

### ADVANTAGEOUS EFFECT OF THE INVENTION

Applying plastic deformation to the lid enhances its strength, ductility, and toughness, resulting in a more reliable and efficient component. It provided in-situ reinforcement during the initial clamping of the clip elements. This deformation ensures better distribution of the clamping force across the entire contact surface between the clip and the conductor, improving the clip's mechanical strength and significantly reducing assembly stress. Additionally, the elastic deformation provides a more reliable connection and secure holding of the conductor (a contact spring force), thanks to the spring-like functionality of the lid. Due to plastic deformation, there is a material hardening effect caused by the plastic deformation itself. The inherent dislocations within the material lead to this hardening.

### BRIEF DESCRIPTION OF THE DRAWINGS

The present invention will now be discussed in more details with reference to the accompanying drawings, in which:
- Figure 1: shows a perspective view of a lightning conductor clip according to a first embodiment of the present invention.
- Figure 2: shows a cross-sectional view of the clip illustrated in Fig. 1.
- Figure 3: shows a perspective view of a lightning conductor clip according to a second embodiment of the present invention.
- Figure 4: shows a cross-sectional view of the clip illustrated in Fig. 3.

### DETAILED DESCRIPTION OF THE PREFERRED EMBODIMENTS

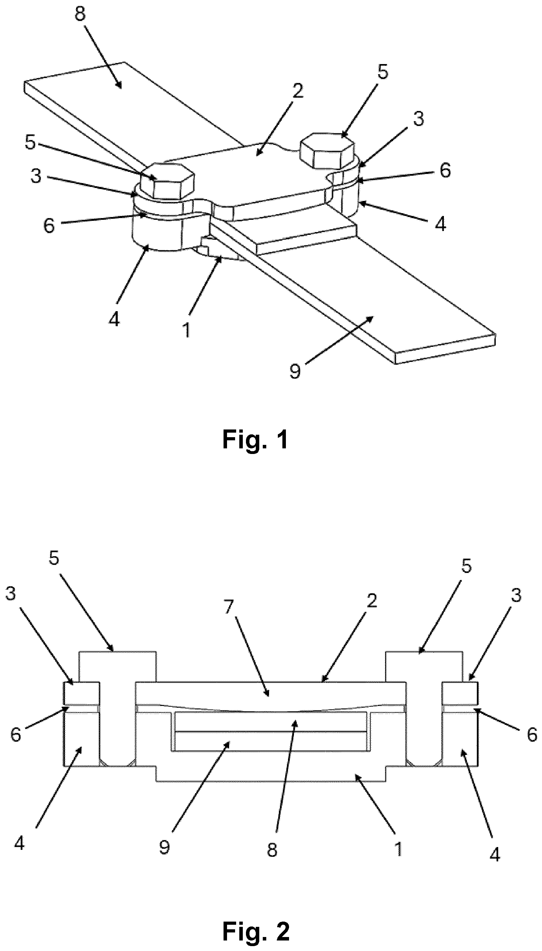

Referring now to Figures 1 and 2 of the drawings, there is illustrated a lightning conductor clip with integrated spring-like functionality according to a first embodiment. The clip comprises a base 1 and a lid 2 configured for forming an electric and mechanical connection by retaining a first conductor element 8 and to a second conductor element 9. The lid 2 has complementary connecting parts 3 disposed at opposite sides and extending over the substantially entire length of the sides. The base 1 has connecting parts 4 disposed at its both sides that engage with the complementary connecting parts 3. Fixing means 5 consists of bolts and matching nuts to which torque is applied by means of a wrench or other tools allowing application of force. The bolt passes through the threaded mounting holes to secure the lid 2 and the base 1 at the corresponding connecting parts 4 and the complementary connecting parts 3. In other embodiments, the fixing means may be also in the form of screws or snap-fits. Between the base 1 and the lid 2 an enclosed passage is formed to receive and retain at least the first conductor element 8 and the second conductor element 9 that are stacked together. The lid 2 has a clamping part 7 between the complementary connecting parts 3 that serves to come into direct contact with the stacked conductors 8, 9. The clamping part 7 is substantially rectangular, but may have other shapes determined by the shape of the conductors 8, 9. An outer surface of the clamping part 7 is preferably flat. An inner surface of the clamping part 7 is substantially curved or convex or in any other suitable geometry such that only part of the inner surface of the lid 1 is in direct contact with the conductor 8, 9. During assembly of the clip, at the beginning, only a part of the inner surface of the clamping part 7 of the lid 2 is in direct contact with the first conductor element 8, resting against it, whereas between the connecting parts 4 and the complementary connecting parts 3 gaps 7 are formed. When screwing the lid 2 to the base 1 by applying clamping force to the bolts, the curved inner surface of the clamping part 7 undergoes elastic or both, elastic and plastic deformation so as it begins to bend such that a contact surface between the clamping part 7 of the lid 3 and the first conductor element 8 increases. During the initial assembly of the clip elements, elastic deformation will occur, and the reinforcement will remain within the part. Accordingly, there may be two scenarios. In the first scenario, the lid 1 undergoes only elastic deformation when clamping force is applied, what means the upon removal of the force the lid returns to its original shape. In the second scenario, the lid 1 undergoes also plastic deformation right after elastic deformation.

As a result of plastic or elastic deformation, the complementary connecting parts 3 and the connecting parts 4 come closer to each other such that the gaps 6 disappear partly or completely, and the contact surface reaches its largest surface. It allows for the better distribution of the clamping force over the entire contact surface of the lid 2 with the conductor, which improves the mechanical strength of the clip and significantly reduces assembly stress. Additionally, the proposed solution allows for better holding of the conductors and more reliable connection due to the plastic-reinforcement and spring-like functionality of the clip.

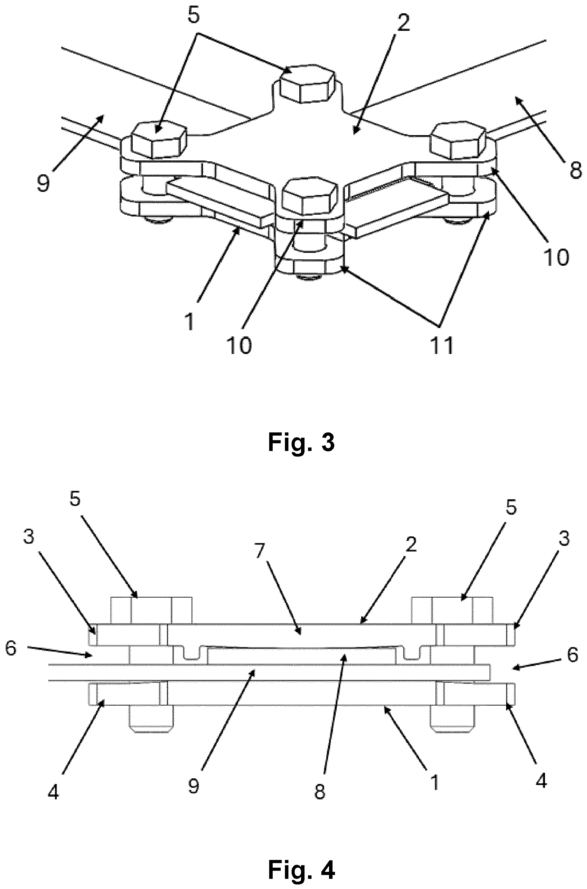

In a second embodiment shown in Fig. 3 and Fig. 4, the connecting parts 4 and the complementary connecting parts 3 comprise rounded projections 10, 11 with mounting holes at each of the four corners of the base 1 and the lid 2 that have rectangular shapes. The connecting parts 4 of the base 1 are preferably pre-bent downwards, facing away the lid 2. An inner surface of the clamping part 7 of the lid 2 is curved. By applying clamping force to the bolts 5, the pre-bent connecting parts 4 and the clamping part 7 of the lid 2 undergo plastic deformation, adjusting the tolerances of the parts, enhancing yield strength by plastic deformation, ductility, and toughness, leading to a more reliable and efficient component.

The lid 2 may be formed from any suitable material such as metal or plastic having sufficient yield properties allowing the material to deform under the action of clamping force.

During an external lighting event, causing electrical current to flow through the conductors 8, 9, the forces generated by the electromagnetic field are compensated by the clip, which acts as a spring, absorbing the energy and redistributing the forces across the base 1 and the lid 2.

## Claims

1. A lightning conductor clip for coupling at least a first conductor element (8) and second conductor element (9) to form an electric and mechanical connection by applying clamping force, said lightning conductor clip comprising:
a base (1) having connecting parts (4) at its opposite sides;
a lid (2) having complementary connecting parts (3) at its opposite sides;
fixing means (5) for joining the base (1) and the lid (2) together at the connecting parts (4) and the complementary connecting parts (3);
wherein the base (1) and the lid (2) define an enclosed passage for receiving and
retaining at least the first conductor element (8) and the second conductor element (9),
**characterized in that** between the connecting parts (4) and the complementary connecting parts (3) a gap (6) is formed such that the lid (1) undergoes elastic deformation or elastic and plastic deformation in the given order, when clamping force is applied to the fixing means (5) causing the connecting parts (4) and the complementary connecting parts (3) to come closer, thereby increasing a contact surface between the lid (2) and the conductor elements (8, 9).

2. The lightning conductor clip according to claim 1, **wherein** the lid (2) comprises a clamping part (7) disposed between the connecting parts (4), said clamping part (7) has a curved or geometrically formed inner surface facing the base (1).

3. The lightning conductor clip according to claim 1 or 2, **wherein** the complementary connecting parts (3) of the lid (2) are bent out or pre-formed at part upwardly with respect to substantially flat outer surface of the clamping part (7).

4. The lightning conductor clip according to anyone of claims 1-3, **wherein** the lid (2) is made of metal or plastic being suitable for plastic deformation under the action of clamping force.

5. The lightning conductor clip according to anyone of claims 1-4, **wherein** the fixing means (5) is a bolt with a nut, a screw or a snap-fit.

6. The lightning conductor clip according to anyone of claims 1-5, **wherein** the connecting parts (4) and the complementary connecting parts (3) comprise rounded projections (10, 11) disposed at each corner of the lid (2), said rounded projections (10, 11) have mounting holes for receiving the fixing means (5).
